# EUROPEAN PATENT APPLICATION

(11) **EP 3 693 871 A1**
(43) Date of publication of application: **12.08.2020**
(21) Application number: 19382095.8
(22) Date of filing: 11.02.2019
(51) Int. Cl.: G06F 16/9535, H04L 29/06, H04L 29/08, G06Q 30/02, G06F 21/62

(54) **A COMPUTER IMPLEMENTED LARGE-SCALE METHOD, A SYSTEM AND COMPUTER PROGRAM FOR OPTIN-REDUNDANT PERSONALIZED DATA AGGREGATION AND CONTENT DELIVERY IN TELECOMMUNICATION NETWORKS**

(71) Applicant: Telefonica Digital España, S.L.U., 28013 Madrid (ES)
(72) Inventor: Molina del Río, Carlos, 28013 Madrid (ES); Sinfreu Alay, Albert, 28013 Madrid (ES); López-Adeva Fernández-Layos, Pedro, 28013 Madrid (ES)
(74) Representative: Carlos Hernando, Borja

(57) **Abstract**

The present invention refers to computing methods and systems for delivering personalized content to users of telecommunication networks. In particular, the invention relates to a method, system and computer program, for delivering optin-redundant personalized content that also preserves the user's privacy. User clustering anonymization is achieved by first anonymizing "items/segments or features" and combining these by machine learning method with anonymized user identities.

## Description

### TECHNICAL FIELD OF THE INVENTION

The present invention generally relates to computing methods and systems for delivering personalized content to users of telecommunication networks. In particular, the invention relates to a providing technical large-scale method, system and computer program, for delivering optin-redundant personalized content that is informative and yet preserves the user's privacy. The meaning of large-scale encompassing data from millions of users. In addition, new implementation algorithms are proposed for handling that amount of data within reasonable boundaries concerning computational complexity and timing constraints.

### BACKGROUND OF THE INVENTION

Nowadays, profiling a customer is considered personal information by various privacy regulations depending on the consumer information that is used for that profiling, e.g. the GDPR regulation in Europe. The privacy Regulator stipulates that user data may be processed with the proviso that a clear legitimate interest exists to improve the service that customer signed up for or because the user reasonably expects you to be doing it. This is achieved by intermediate steps in communication networks that guarantee that the user is duly informed and its informed consent is obtained.

The need of an opt-in for a large number of users might be a stopper for many services, as the need difficulty arises that users event cannot be individually grouped or assigned to clusters of similarities if the group or cluster is built using information considered as personal. In a simple scenario, the skilled person could do a random clustering of all the users and subsequently feature segmentation. This would allow using the segments without explicit optins, but the result would make the generated segments extremely poor for each individual.

Arrangement and method for anonymous user profiling and targeted content provision in the prior art has only been address partially.

US9094414B2 discloses a computer device that provides a media profile entity configured to store and maintain at least one user-adjustable personal media profile for a user capable of accessing a network, and related sites, services and/or applications via a number of terminal devices, the personal media profile describing the user's interests preferably excluding identifiable information, the interests being represented on a number of levels including interest categories, and the interests are at least partially determined based on monitoring the user behavior relative to the network, and an authentication entity configured to associate a terminal utilized by the user with the media profile of the user based on profile-identifying data provided to/by the terminal.

Additionally, US8626697 discloses a method wherein a first contextual data characterizing behavioral attributes of a user visiting at least one web page is received. The first contextual data is collected by anonymously tracking interaction of the user with the at least one web page via a data collector embedded in the at least one web page. Second contextual data characterizing non-behavioral attributes of the user is also received. The second contextual data is based solely on anonymously collected information and it originates from a data source other than the data collector. Thereafter, it is determined which attributes among a plurality of pre-defined attributes are present for the user based on the first contextual data and the second contextual data. The determined plurality of attributes are associated with a best fit amongst a plurality of clusters or associations generated by grouping users with similar attributes that participated in a plurality of historical transactions. Subsequently, using at least one predictive model trained with historical user conversion data, it is determined which of a plurality of available offers for presentation via at least one web page is most likely to result in a conversion of the user based on the pertinent cluster or association so that the presentation of the identified available offer can be initiated.

The method and systems of the prior art have the drawbacks and the disadvantages that they use data collectors embedded in at least on the web page or web browser. A form of that data collection is normally referred as a cookie. In many respects, storing a cookie with the individual network identity of a particular user will not withstand any privacy test.

Thus, new methods and systems are required for providing user, especially web users with mobile phone devices or fixed internet connection, with personalized information that in informative and yet preserved their privacy are needed.

Additionally, vast amount of data received in the order of millions of users may be informative without compromising tight privacy regulations. These data inputs need to be properly filtered. Indeed, another object of the present invention to be able to provide a clean user clustering that exclude activities that are not directly related to the behavior of an end user. Web automatic artifacts, being bots, spiders or any other are activities are taken out of the traffic registration.

It is yet another object of the present invention to reduce the computational complexity and computation power needed to process that amount of information that will make any calculation a very long task, and at the same time will require vast amounts of computer CPU time. In particular, the K-means algorithms have been found to be particularly unsuitable to handle large amount of data.

### DESCRIPTION OF THE INVENTION

The present invention proposes a method and system comprising the steps described in the independent claims. It also describes preferred method for Method for optin-redundant data aggregation in networks and optin-redundant personalized content delivery in telecommunication networks, comprising the following steps of anonymizing user identity in a telecommunication network at a first network entity element, and anonymizing a set of features corresponding to domain-related resources available through said network at said first network entity element, and count or calculate the number of times that each anonymized user identity has reached one or more of the anonymized set of features within a predetermined period of time,and creating a matrix comprising anonymized users and said anonymized set of features or items, and achieving dimensionality reduction of said set of features in a reduced matrix by machine learning methods, preferably a by single value decomposition algorithm, and clustering anonymized users using said reduced matrix of said set of features by machine learning methods, preferably using recursive K-Means algorithms, and profiling cluster features into segments or categories, and delivering optin-redundant personalized user segments or categories to said anonymized user.

In another embodiment the step of anonymizing user identity is based on sociodemografics, preferably age and gender parameters, or based on user browser traffic fingerprinting.

Additionally, a training module is arranged and outputs a user feature matrix and an item feature matrix based on a user identification or its cookie-based identification as a first input, a predetermined content as a second input, and at least a number of user actions as the third input.

In yet another embodiment step of clustering anonymized users using said reduced matrix of said set of features by machine learning methods, recursive K-Means algorithms are used. Preferably recursive K-Means algorithms are based on bisecting k-means algorithms, with the following further steps to ensure compliance with anonymization requirements: put all users in a single cluster, and Perform k-means on all clusters bigger than a predetermined maximum size parameter, and constraining the number of clusters generated as fixed parameter, preferably in the range between 2 to 100, most preferably 8, and find all clusters smaller than a required size, preferably 20 users per cluster, and merge them to the closest cluster and continue merging clusters until all clusters are big enough. If the result of the merging is a single cluster, stop and return the cluster. Otherwise, for each resulting cluster return to step 2. The process ends when all users have been assigned a cluster based on their anonymized hashed, namely navigation.

Additionally, the counting or calculating the number of times that each anonymized user identity has reached one or more of the anonymized set of features within a predetermined period of time, includes a previous filtering step to discard the activity of bots by using a user exponential smoothing function.

Advantageously, the anonymized domain counts for a given anonymized user are calculated over the overall navigation traffic, identified as bot-related activities and discarded from subsequent calculation.

Preferably, the anonymized domain counts for a given anonymized user are divided by the total number of domains visited by the user to obtain the proportion of the user navigation on the domain in order to avoid bot-like domains skewing further results.

In another embodiment he step of clustering anonymized users using said reduced matrix of said set of features by machine learning methods further includes adding extra clusters with a single user, where it is identified that said user has marked a specific domain as his optin.

Preferably, the step user profiling using a matrix factorization is based on vector product of clusters and items to obtain an affinity vector,

In yet another embodiment, the training phase includes cluster refresh optimization parameters that determine when to maintain and iterate subsequent training phases.

The present invention also describes a system for the implementation of the method in claim 1, comprising A first network entity element, With an input for receiving anonymized user identity in a telecommunication network at a first network entity element, and the first network entity element further that anonymizes a set of features corresponding to domain-related resources available through said network at said first network entity element, and counts or calculates the number of times that each anonymized user identity has reached one or more of the anonymized set of features within a predetermined period of time, and creates a matrix comprising anonymized users and said anonymized set of features or items, and achieves dimensionality reduction of said set of features in a reduced matrix by machine learning methods, preferably a by single value decomposition algorithm and clusters anonymized users using said reduced matrix of said set of features by machine learning methods, preferably using recursive K-Means algorithms, and a second entity element, separated from the first network so as not to have access to internally processed data from this element, profiles cluster features into segments or categories, and a third network entity element delivers optin-redundant personalized user segments or categories to said anonymized user and controls a training process and module.

Preferably, the first network entity module applies a recursive K-means algorithm so as to allow large-scale data aggregation with limited computational resources and/or computing time.

Advantageously, the third network entity element further control a training process and module-

Finally, these methods may preferably be implemented in computer program or products.

### BRIEF DESCRIPTION OF THE DRAWINGS

Figs. 1a and 1b schematically illustrates high-level architecture and use case of the present invention comprising the two level anonymization scheme.
Figs. 2 schematically illustrates an embodiment with the use of matrix factorization, including the vector product of user cluster with items features, to obtain an affinity vector.
Figs. 3a schematically illustrates a training module based on Machine Learning methods showing how user features and item features are the output of an aggregation and anonymization process.
Fig. 3b is a numerical example of the ML process for creating user clusters and feature item sets anonymizing all considered personal information.
Fig. 3c illustrates further details of the anonymization and later training process, specifically the legal entity elements where they take place.
Figs. 4 schematically illustrates an embodiment of a hybrid system, wherein a preferred used case for the present invention is presented, wherein real time bidders in online real-time auctions are provided with said aggregated content.

### DETAILED DESCRIPTION OF THE INVENTION AND OF PREFERRED EMBODIMENTS

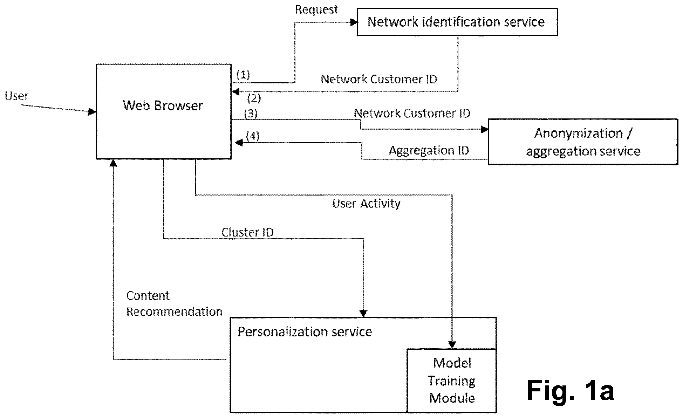

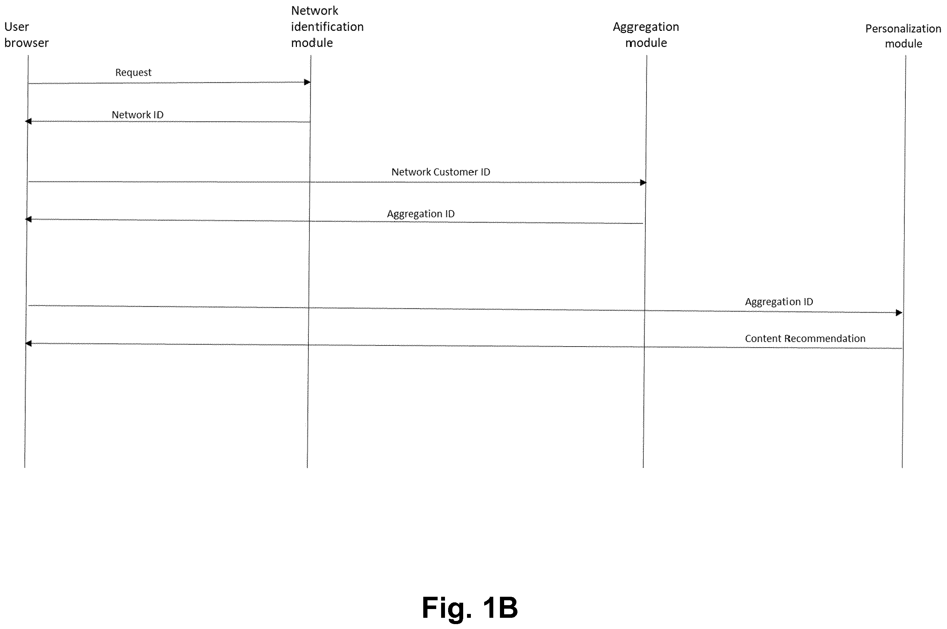

Fig. 1a describes a high-level architecture of a preferred embodiment of the present invention and Fig. 1b a corresponding protocol thereof. Typically, the user accesses a website that is connected to the personalization engine. The website, as executed in the client's browser, queries the network identification module (10). This module then responds back with a unique ID that uniquely identifies a client as a landline or mobile subscription (network customer ID). Subsequently, the website uses the network customer ID to send it to an aggregation module (13). The module responds with the cluster ID (aggregation ID) to which that specific customer belongs.

Internally the website may additionally generate a Cookie containing a fingerprint that will represent the customer. Advantageously, the fingerprint may be sent to the user's device and stored therein.

Finally, the website queries (Cluster ID) the personalization module. It preferably responds with a configurable amount of content/product recommendations.

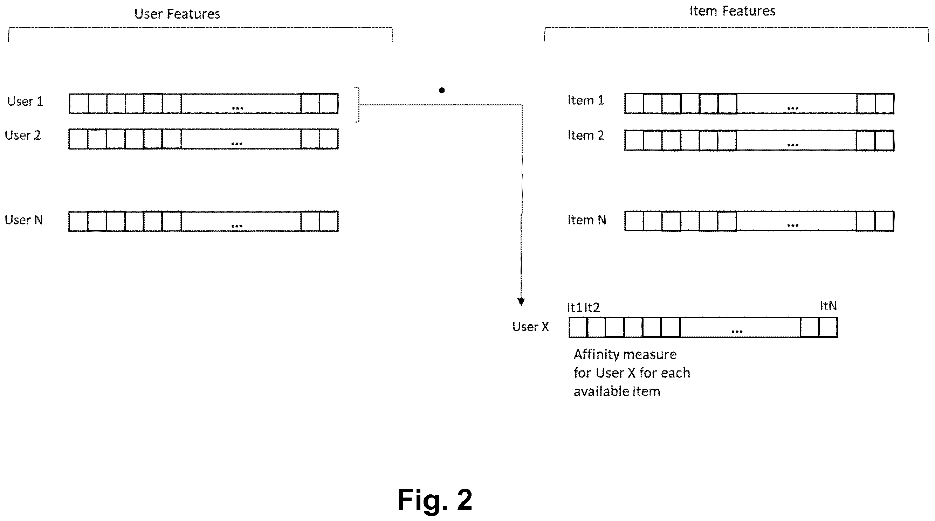

Fig.2 illustrates an advantageous embodiment on how personalized content is matched to the end user. An anonymized user is assigned to a cluster of similar users in accordance with previous user traffic patterns or other common patterns, such as sociodemographic characteristics or any other clustering methods.

Subsequently the cluster set of features corresponding to preferred items and segments are matched to said cluster, preferably by a vector product operation, with vectors made of content or item features. Finally, an affinity measure for each user and item comes as a vector output (A). The set of item features with the highest score or affinity measure will then be chosen for the particular user and will be pushed or delivered to the user.

Another problem of the present invention is to be able to provide clean user clustering that exclude activities that are not directly related to the behavior of an end user. Web automatic artifacts, being bots, web spiders, crawlers or any other are activities are taken out of the traffic registration. To that purpose, each anonymized domain count for a given anonymized user is divided by the total number of domains visited by the user to obtain the proportion of the user navigation on the domain in order to avoid very active users, identified as bots, skewing the results.

Additionally, each domain is then normalized by the total proportion of navigation across all users in order to avoid the most visited domains, maybe mobile API (application interface) calls, skewing the results. Indeed, above certain predetermined percentage thresholds of traffic, the domain is identified as an app call, and will be discarded from further consideration.

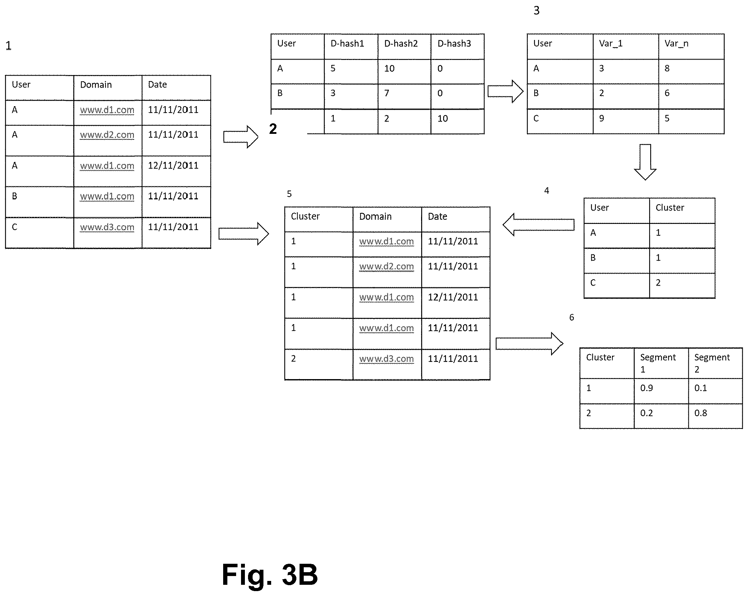

As shown in Fig. 3b The result of this process can be represented as a matrix where each row represents a user, each column a domain and each value represents the normalized proportion of navigation for each user on the given domain. This matrix can have million or rows and hundreds of thousands of columns. Computational complexity and power needed to process that amount of information will make any calculation a very long task, and at the same time will require vast amounts of computer CPU time. This is yet another problem that the present tackles.

Thus, in order to move the processing time of later steps from several days to less than an hour a preferred embodiment will first apply dimensionality reduction (SVD) to said matrix to move or reduce the number of columns to the order of hundreds. Ideally, the number of columns will have a value of about 32 components.

The SVD performs linear combinations of all given features to later select the N - 32 in this case - combinations that best differentiate or equalize one row from another.

This optimizes needed computing time versus information granularity loss.

Thereafter a clustering algorithm is applied. The clustering algorithm must fulfill the following non-standard criteria:
- It must be able to create clusters in the order of a million, where typical clustering algorithms are designed to create less than hundreds of clusters, and
- It must ensure that no cluster has less than the required number of users in order to comply with user anonymization requirements.

Classical clustering algorithms do not meet simultaneously these two requirements or no requirement at all. For example, classical k-means, the most popular clustering algorithm, cannot scale to this number of clusters. It cannot neither ensure a minimum number of elements per cluster. Other faster algorithms like DBSCAN or Birch cannot ensure minimum number of elements per cluster either.

As a preferred use case or embodiment, the present invention implements a custom algorithm for this problem, based on k-means with recursive properties. Hereinafter referred to as recursive k-means.

K-means algorithms in the prior art try to find a set of k clusters *Sᵢ* (where *i=1...k*), with the centroid of the cluster *cᵢ* defined as the mean of all points *xⱼ* in the cluster in such a way to minimize the following loss function (variance inside each cluster):
An exact solution of this problem is computationally infeasible and the k-means algorithm is an approximation to the exact solution. Sometimes even the k-means algorithm is too expensive to run and additional approximations like the bisecting k-means algorithm have been devised.

The recursive k-means algorithm in the present invention is similar to bisecting k-means but adds further steps to ensure compliance with the anonymization requirement:
1. Put all users in a single cluster
2. Perform k-means on all clusters bigger than some parameter (anything bigger than the minimum size, we have set the value 100). The number of clusters generated is a fixed parameter (typically in the range 2 to 100, we have set it to 8).
3. Find all clusters smaller than the required size, typically 20 users per cluster, and merge them to the closest cluster. Do not stop merging clusters until all clusters are big enough.
4. If the result of the merging is a single cluster, stop and return the cluster. Otherwise, for each resulting cluster return to step 2.

At the end of this process, all users have been assigned a cluster, based on their anonymized, hashed, navigation.

For each cluster, the unhashed domains visited by the users contained in the cluster are counted. The same normalization to the domains that was described for the individual users is now performed. Some of the domains in the cluster have features associated to them, in the following referred as segments. Preferably, each of these segments are multiplied by the normalized proportion of navigation on the domain for the cluster and the result is added to the cluster segments. At the end of this process each cluster, and thus each user of the cluster, has associated several values to the segments present in the navigation.

The segments associated to each user are stored in a database. One of the applications of these segments is to offer personalized recommendations on web pages. In order to do so the user activity on the web page is recorded by the web page owner.

Since a big amount of web traffic is due to the activity of bots an embodiment of the present invention first applies some previous filtering. Users are considered to be bots users that either:
1. Have interactions with the page during more than 12 hours. It is considered that there are no interactions if not a single web page interaction has occurred during 8 hours.
2. Have more than 100 interactions per day (this can be configured depending on the web page).

In order to perform this filtering efficiently a user exponential smoothing function is used to approximate the interactions per day:
Where *t_{α}* and *t_{β}* represent two instant of time where activity happens and c the activity count for a given user at those time instants. The parameter π is defined as:
When c surpasses the threshold value of *100*/*T* we consider that the second condition for bot detection has been fulfilled.

Applying machine learning techniques, preferably matrix factorization, to build a mathematical representation (vector embedding), not for each user but for each segment. The vector embedding of the user is advantageously the sum of the vector embedding of the segments of the user. By associating vector embedding to segments the module can offer personalized recommendations to first time visiting users on the web page, with no prior interaction with the web page at all, if we know the user's segments.

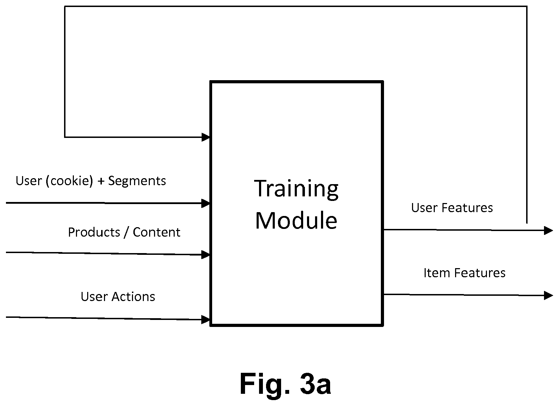

Fig. 3a illustrates the training model input-output characteristics. This training module preferably receives three kind of parameters, namely:
A first input that comprises a User_Id (31), which is an anonymization of the Network Customer ID and is provided by the network identification module.

Said anonymization can be achieved by several means. As a non-limiting example, a hashing function, e.g. SHA-256 with salt, can be used. Alternatively, fingerprint-generated values based on device (phone or computer) characteristics and other methods may also be used.

Said first input also comprises segments or personas, representing a set of characteristics that define a user behavior, profile or intent.

The second input (23) comprises contents or products, be it articles, posts or the like, that the model will recommend. For each of said product or content a set of extracted features or metadata are provided in the second input as well. This feature extraction is preferably done applying natural language processing (NLP) techniques.

The third input (33) comprises user actions that represent how each one of the users have previously interacted with at least some of the given content. However, the training may equally be carried out without previous interactions.

The training module will basically undertake a Matrix factorization algorithm and provides two matrixes as output, marked as User features and Item features.

For different users training process may be repeated. A feedback-loop (34) in the training module will feed the training algorithm with each client's products/ content, it's user actions and also the existing user features generated in previous training executions.

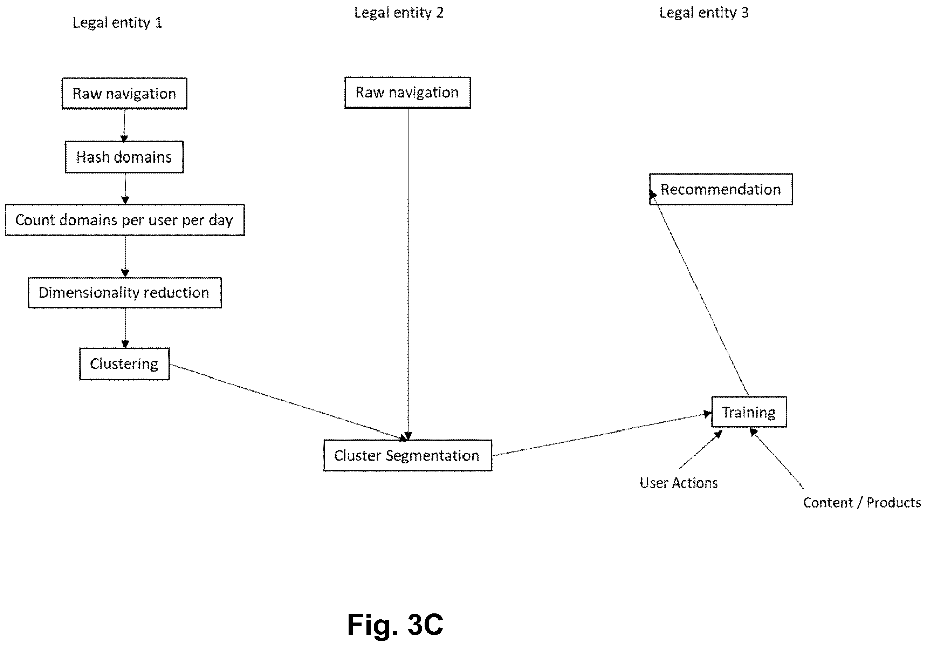

Fig. 3c shows a schematic representation of the network entity elements included in the present invention.

The first network entity will anonymize the user's identify. This anonymization can be done by several means always taking into account that for each execution of the anonymization one users always has to have the same has value and that it is a non-reversible algorithm of methodology, a hashing function, preferably SHA-256 with salt for example or others.

The first network entity element will also anonymize the user's features (navigation, age, gender, etc.). When navigation is used as a feature, a white list will preferably be used . Non desired domains won't make it to the next steps and will be discarded. Again, this anonymization can be carried out by several means, always taking into account that for each execution of the anonymization one user always has to have the same identity. Hashing function, SHA-256 with salt for example, or random values, (randomly generated values, but keeping the same values across executions), are preferred ways to do so.

Count the number of times that each anonymized user ID belongs or has each one of the anonymized features. Thereafter, run a Dimensionality Reduction algorithm (SVD - Single Value Decomposition) to reduce the dimensions improving execution speed and storage space. This algorithm performs lineal combinations for all the characteristics available (visited domains in this case) to reduce the number of dimensions or each user to a configurable vector length. In this case a range between 32 and 50 effectively discriminate the characteristics that define each user-Cluster anonymized users using the anonymized set of features using recursive K-Means as explained in previous paragraphs, e.g. by adding constraints to the algorithm, as not not having clusters of less than 20 people.

The second network entity element will profile clusters using raw navigation while the third network entity element will use the segments in the training along with user actions and content / products to recommend.

In yet another embodiment, the case arises wherein a user opted-in and so consented to the use of his personal data for said personalization module, the system will create a new cluster that will be formed only by the user that has opted in. In doing so, the system is additionally preventing extra calculations and any excess CPU consumption in the system.

In a similar way, each user may optin or optout for each one of the unique services (clients) that the personalization module is integrated with.

So for this, the aggregation service will respond to the customer web browser with the cluster id that corresponds to the user according to whether he has opted in (group cluster ID) or not (individual cluster id).

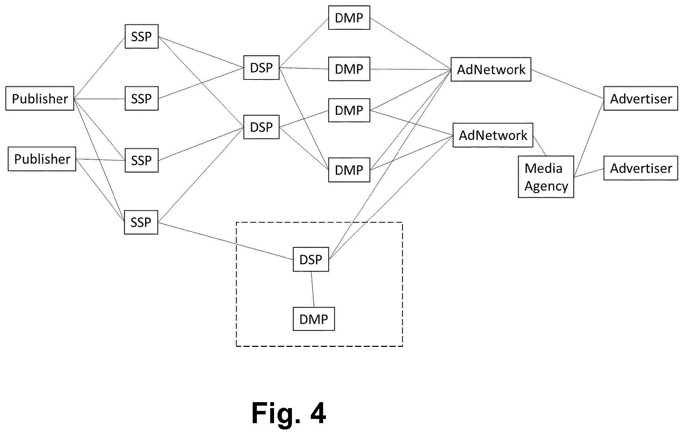

Fig.4 illustrates a online real time bidding for personalized content where the present invention may be used. More granular aggregated information may be gathered at a data management platform (DMP) and provided or sold to the demand side platform (DSP). This demand side platform will then make a more accurate and informed decision when bidding for more granular modules will use this information for placing better informed when biddings for ad inventories and customers.

This segmentation in three different entities, namely three different network entity elements preferably also allow the legal owner of said set of aggregated /anonymized data to share it as second party data in a DMP being it only used by a proprietary DSP, a walled garden approach, so said DSP biding can potentially be higher due to the best knowledge of connected user characteristics

When reading the teachings of the description, the skilled person understands that all embodiments are exemplary and do not constitute undue limitations to the present invention.

## Claims

1. Method for optin-redundant data aggregation in networks and optin-redundant personalized content delivery in telecommunication networks, comprising the following steps:
Anonymizing user identity in a telecommunication network at a first network entity element,
anonymizing a set of features corresponding to domain-related resources available through said network at said first network entity element,
count or calculate the number of times that each anonymized user identity has reached one or more of the anonymized set of features within a predetermined period of time,
creating a matrix comprising anonymized users and said anonymized set of features or items, and
achieving dimensionality reduction of said set of features in a reduced matrix by machine learning methods, preferably a by single value decomposition algorithm
clustering anonymized users using said reduced matrix of said set of features by machine learning methods, preferably using recursive K-Means algorithms, and
profiling cluster features into segments or categories, and
delivering optin-redundant personalized user segments or categories to said anonymized user.

2. The method according to claim 1, wherein the step of anonymizing user identity is based on sociodemografics, preferably age and gender parameters, or based on user browser traffic fingerprinting.

3. The method according to claim 1, wherein a training module outputs a user feature matrix and an item feature matrix based on a user identification or its cookie-based identification as a first input, a predetermined content as a second input, and at least a number of user actions as the third input.

4. The method according to claim 1, wherein in the step of clustering anonymized users using said reduced matrix of said set of features by machine learning methods, recursive K-Means algorithms are used.

5. The method according to claim 4, wherein recursive K-Means algorithms are based on bisecting k-means algorithms, with the following further steps to ensure compliance with anonymization requirements:
put all users in a single cluster, and
perform k-means on all clusters bigger than a predetermined maximum size parameter, and constraining the number of clusters generated as fixed parameter, preferably in the range between 2 to 100, most preferably 8, and
find all clusters smaller than a required size, preferably 20 users per cluster, and merge them to the closest cluster and continue merging clusters until all clusters are big enough, and,
if the result of the merging is a single cluster, stop and return the cluster, and Otherwise, for each resulting cluster return to step performing k-means on all clusters , and
ending the process when all users have been assigned a cluster based on their anonymized hashed, namely navigation.

6. Method according to claim 1, wherein counting or calculating the number of times that each anonymized user identity has reached one or more of the anonymized set of features within a predetermined period of time, includes a previous filtering step to discard the activity of bots by using a user exponential smoothing function.

7. Method according to claim 1, wherein anonymized domain counts for a given anonymized user are calculated over the overall navigation traffic, identified as bot-related activities and discarded from subsequent calculation.

8. The method according to claim 7 wherein anonymized domain counts for a given anonymized user are divided by the total number of domains visited by the user to obtain the proportion of the user navigation on the domain in order to avoid bot-like domains skewing further results.

9. The method claim 1, wherein the step of clustering anonymized users using said reduced matrix of said set of features by machine learning methods further includes adding extra clusters with a single user, where it is identified that said user has marked a specific domain as his optin.

10. The method according to claim 1, wherein the step user profiling using a matrix factorization is based on vector product of clusters and items to obtain an affinity vector,

11. Method according to claim 3, wherein the training phase include cluster refresh optimization parameters that determine when to maintain and iterate subsequent training phases.

12. System for the implementation of the method in claim 1, further comprising a first network entity element, with an input for receiving anonymized user identity in a telecommunication network at a first network entity element, and
The first network entity element further anonymizes a set of features corresponding to domain-related resources available through said network at said first network entity element, and counts or calculates the number of times that each anonymized user identity has reached one or more of the anonymized set of features within a predetermined period of time, and creates a matrix comprising anonymized users and said anonymized set of features or items, and achieves dimensionality reduction of said set of features in a reduced matrix by machine learning methods, preferably a by single value decomposition algorithm, and clustering anonymized users using said reduced matrix of said set of features by machine learning methods, preferably using recursive K-Means algorithms, and
a second entity element, separated from the first network so as not to have access to internally processed data from this element, profiles cluster features into segments or categories, and
a third network entity element delivers optin-redundant personalized user segments or categories to said anonymized user and controls a training process and module.

13. A system according to claim 12, wherein the first network entity module applies a recursive K-means algorithm to allow large-scale data aggregation with limited computational resources and/or computing time.

14. A system according to claim 12, wherein the third network entity element further controls a training process and module.

15. Computer program or product for carrying out the method according to claim 1.
